# EUROPEAN PATENT SPECIFICATION

(11) **EP 3 026 461 B1**
(45) Date of publication and mention of the grant of the patent: **08.03.2017**
(21) Application number: 14004025.4
(22) Date of filing: 28.11.2014
(51) Int. Cl.: G01S 19/21, G01S 19/47, G01S 19/14

(54) **Device and method for flight procedures validation and verification for an air vehicle**
Vorrichtung und Verfahren zur Validierung und Verifizierung von Flugverfahren für ein Luftfahrzeug
Dispositif et procédé de validation et vérification de procédures de vol destiné à un véhicule aérien

(43) Date of publication of application: 01.06.2016
(73) Proprietor: Pildo Consulting, SL, 08042 Barcelona (ES)
(72) Inventor: Soley Rimbas, Santiago, 08042 Barcelona (ES)
(74) Representative: Juncosa Miro, Jaime

(56) References cited:
- US-A- 5 714 948
- US-A- 6 005 513
- US-A1- 2004 257 275
- US-A1- 2012 053 832
- US-A1- 2014 120 500
- PAIELLI R ET AL: "Carrier Phase Differential GPS Integrated with an Inertial Navigation System: Flight Test Evaluation with Auto-Coupled Precision Landing Guidance", NTM 1995 - PROCEEDINGS OF THE 1995 NATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 20 January 1995 (1995-01-20), pages 711-724, XP056005607,

## Description

### Field of the invention

The present invention generally relates to satellite navigation devices and flight procedures validation. Particularly, the invention relates to a device and to a method for flight procedures validation and verification for an air vehicle, by means of a portable, flexible and easy to use platform that can be installed either in fixed-wing aircraft or in rotorcraft.

### Background of the invention

A flight procedure is the operation that an air vehicle performs for arriving or departing from an airport, and it is composed by a series of so-called waypoints or points defined in the airspace that a navigation system incorporated in an air vehicle must follow, by providing guidance to the pilot.

Up to now, the validation of flight procedures is performed by a flight validation aircraft equipped with all the electronics necessary on-board. This way of flight validation, requires the actual displacement of the validation aircraft to the location where the procedures are to be validated, becoming a very much time consuming solution besides being very expensive.

Moreover, currently flight validation data has to be coded within the air navigation equipment, the coding to be used depending on external companies that usually charge a significant fee for it.

US-B2-8,160,758 discloses a method for radar aided positioning of an air vehicle for approach and landing. The method includes integrating GNSS data and inertial data to calculate a position of the air vehicle, scanning the environment forward of the air vehicle with a radar, and accessing a database of terrain features and their radar signatures. The method further includes matching features in the radar scan data to the radar signatures in the database to determine an actual position of the air vehicle and synthesizing glide slope and localizer signals for the approach and landing based on the determined actual position.

US-B2-8,467,966 discloses a device for aiding the flight management of an aircraft including a navigation display, and a personalized database capable of storing navigation-aid data each datum comprising a classification type representative of a family or of one or more categories of navigation-aid data, one or more periods of validity of the said datum, information relating to at least one geographic zone of the said datum, one graphic and/or textual representation of the said datum, and selection means allowing an operator to choose one (or more) type(s) of classification, called selected type(s) and extraction means capable of extracting from the database the navigation-aid datum the said extraction means transmitting the said extracted datum or data to the said navigation display capable of displaying the representations of the said extracted data comprising a navigation display and a flight management system comprising means for computing a flight plan that the aircraft is assumed to have to follow.

However these antecedents are more related to the guidance of the aircraft and not to supporting flight validation, and do not allow affording a backup of captured signals of a first satellite navigation receiver by means of using a second satellite navigation receiver. Moreover, the device provided by US-B2-8,467,966 is not a portable device, flexible and easy to transport.

The scientific document "Carrier Phase Differential GPS Integrated with an Inertial Navigation System: Flight Test Evaluation with Auto-Coupled Precision Landing Guidance" describes a DGPS/INS navigation system which was flight tested in a twin engine transport aircraft. The navigation system was tested by flying auto-coupled approaches to a 50 ft altitude, where the pilot disengaged the autopilot and either landed the aircraft or executed a go-around. The real-time navigation system is configured for code/carrier smoothing without ambiguity resolution.

US 5,714,948 discloses a satellite based air traffic control (ATC) system including an aircraft unit on an aircraft and an ATC facility. The aircraft unit includes an AARTS processor, GPS receivers or other satellite receivers, a comparator for comparing the GPS data, a two-way radio, and a transmitter and receiver for communicating information and data over a data link with the ATC facility. The ATC facility includes an ATC computer, a two-way radio, a display for displaying aircraft, and a transmitter and receiver for communicating information and data over the data link. The aircraft transmits aircraft identification information, GPS data, aircraft status information, and a transmit detect code to the ATC facility to allow the ATC to track the aircraft and identify the aircraft communicating on two-way radio. The traffic control system and a flight control system utilizing GPS may be used for aircraft in the air and on the ground, and may be used for ships, boats, automobiles, trains or railroads, and aircraft.

US-A-6005513 discloses a portable three-dimensional position and velocity data archiving system for use with an aircraft during flight testing and evaluations. The system includes a ground based system and an airborne system. Each system includes a GPS receiver electrically connected with a GPS antenna for receiving and interpreting GPS signals transmitted from a GPS satellite constellation. Each system also includes a radio communication device for transferring position and velocity data as well as error correction data and guidance cues between the ground and airborne systems. The portable system acquires, processes, archives, and provides precise three-dimensional position and velocity data for the aircraft in real time. Information regarding aircraft position, direction, velocity, acceleration and any correction needs referenced to a selected coordinate system is immediately presented to a vehicle piloting crew on analog as well as digital indicators.

US-A1-2012053832 discloses systems, methods, and computer program products for flight validation (FV). Embodiments of this disclosure implement the requirements of FAA Notice 8260.67 as they relate to FV. In particular, embodiments enable FV to be performed in its entirety, including flight and/or ground obstacle assessment, and on-course/on-path flight evaluation. In addition, embodiments enable a post-flight validation phase, which provides post flight analysis and archiving capabilities. Embodiments of this disclosure may also be integrated with existing instrument flight procedure design tools, including, for example, the TARGETS (Terminal Area Route Generation Evaluation & Traffic Simulation) tool developed by the MITRE Corporation.

US-A1-2014120500 discloses systems and methods for evaluating maneuvers of an aircraft. In one embodiment, a method comprises setting a mode of a handheld device to a training mode. When in the training mode, the steps comprise tracking realtime flight data; retrieving standards data based on a maneuver type associated with the realtime flight data; and evaluating the realtime flight data based on the standards data.

It is necessary to provide, therefore, a new device and methods for improving flight validation procedures by using less expensive and more flexible equipment and providing additional information, for instance for allowing detection of possible interferences, for the guidance of the air vehicle.

### Description of the invention

Embodiments of the present invention address these and/or other needs by providing a device for flight procedures, for example GPS, EGNOS, among any others flight procedures, both at ground and at flight level, validation and verification for an air vehicle (aircraft or rotorcraft) that includes two satellite navigation receivers both connected to a satellite navigation antenna in order to capture signals from navigation satellites to be used as flight data, and an inertial measurement unit.

A first satellite navigation receiver of said two satellite receivers and the inertial measurement unit are configured to provide, through a computer unit, coded information for flight guidance from the captured signals for the pilot of the air vehicle.

In the embodiments of the present invention characteristically a second satellite navigation receiver of said two satellite receivers includes a backup unit configured to afford a backup of the signals captured by the first satellite navigation receiver, and includes means configured for processing, by means of a dedicated processor, its own captured signals, obtaining additional information for the guidance of the air vehicle, such as information regarding detection of possible interferences in the captured signals.

Preferably, the first and second satellite navigation receivers and the inertial measurement unit are all integrated into a portable unit. The portable unit may be fitted, according to an embodiment, in an aircraft's or rotorcraft's rack.

According to another embodiment, the portable unit may be installed into a rack case, which optionally may include wheels, fixing the rack case to the aircraft or rotorcraft.

The portable unit may further include a connector for power supply thereof, the connector being arranged to be connected to a power unit of the aircraft or rotorcraft. Alternatively, the portable unit may also be power supplied through a battery (or batteries) included in the rack.

The device according to the invention further comprises means for displaying the coded information for flight guidance and/or the additional information. Preferably, the displaying means include an output for a computing device display, for instance a laptop display, for a flight engineer; and an output for a computing device display, for instance a tablet, for the pilot of the air vehicle.

According to some embodiments, the device may also include reporting means for automatically generating flight procedure validation and verification reports.

Embodiments of the present invention also provide a method for flight procedures validation and verification for an air vehicle, comprising capturing, by a first satellite navigation receiver connected to a satellite navigation antenna, through a connector, signals from navigation satellites to be used as flight data from said satellite navigation antenna; and providing, by the first satellite navigation receiver and an inertial measurement unit, through a computer unit, coded information for flight guidance from the captured signals for the pilot of the air vehicle.

The method also comprises the capture, by a second satellite navigation receiver connected to said satellite navigation antenna, through said connector, of signals from navigation satellites. The second satellite navigation receiver is configured to afford a backup of the signals captured by the first satellite navigation receiver and is configured to process by a dedicated processor its own captured signals, providing additional information for the guidance of the air vehicle, and configured to compare the processed results with the signals captured by the first satellite navigation receiver. The provided additional information includes at least detection of possible interferences in the captured signals.

In some embodiments of the method, the coded information for flight guidance and/or the additional information are further displayed in a computing device display for a flight engineer and/or in a computing device display for the pilot of the air vehicle.

Moreover, in some embodiments of the method, flight procedure validation and verification reports with the coded information for flight guidance and/or the additional information may be automatically further generated.

Present invention is compliant with most up-to-date applicable standards (among others) in support to the validation of Area Navigation (RNAV) Instrument Flight Procedures:
- ICAO Doc 8071: 'Manual on Testing of Radio Navigation Aids, Vol. II "Testing of Satellite-based Radio Navigation Systems";
- ICAO Doc 9906: 'Quality Assurance Manual for Flight Procedure Design, Vol. 5, "Validation of Instrument Flight Procedures";
- ICAO Doc 8168: PANS-OPS, Vol. II, Part 1, Section 2, Chapter 4 "Quality Assurance"; and/or
- EUROCONTROL Guidance Material for the Flight Inspection of RNAV Procedures, May 2005.

Moreover, present invention provides guidance for Lateral navigation (LNAV), LNAV/Vertical Navigation (VNAV), Localizer Performance with Vertical guidance (LPV)/ Localizer Performance (LP) and/or Required Navigation Performance (RNPA-AR) operations.

Therefore, present invention provides a flexible, portable, economical and easy to use solution to conduct flight validation/verification and also reporting of Performance Based Navigation (PBN) flight instrument procedures, either for fixed-wing aircrafts or for rotorcrafts.

### Brief Description of the Drawings

Having thus described embodiments of the invention in general terms, reference will now be made the accompanying drawings, in which:
Fig. 1 is a schematic illustration showing the different elements and systems used by the present invention for performing validation and verification of flight procedures according to some embodiments.
Fig. 2 is an illustration of a preferred embodiment of the device of the present invention.
Fig. 3 is an example of the steps executed by the present invention for performing a flight validation.
Fig. 4 is an example of a report generated with the flight validation and verification procedure of Fig. 3.

### Detailed Description of the Invention

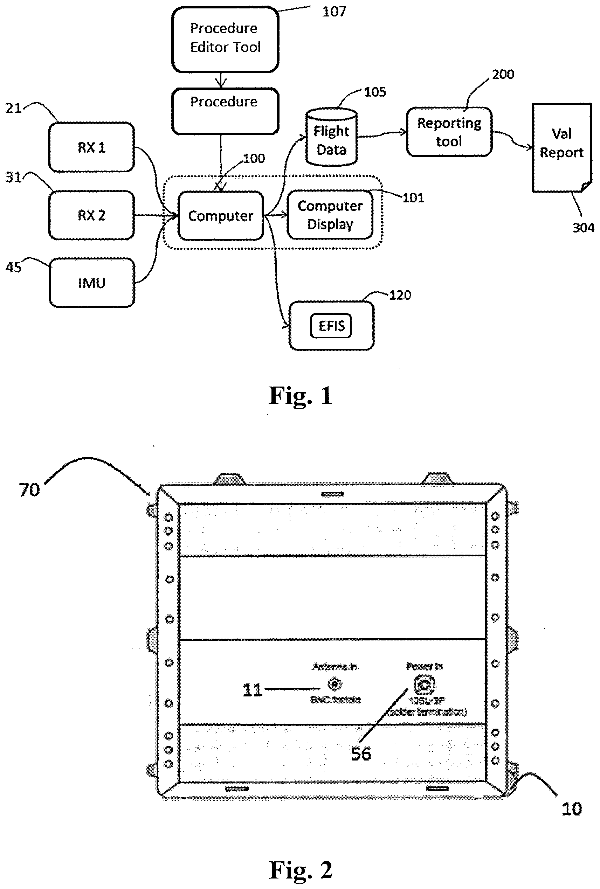

According to the embodiment of Fig. 1, two satellite navigation receivers 21, 31, and an inertial measurement unit 45, provide all the necessary data to a computer unit 100, equipped with a processor running program code instructions that computes, with said data, all the information that a pilot of the air vehicle, and/or a flight engineer, need for the validation of a flight procedure. The information computed by the computer unit 100 is preferably stored in a database 105 and is further used to generate flight validation reports 304 through a reporting unit/tool 200.

The pilot of the air vehicle, for instance a fixed-wing aircraft or a rotorcraft, in accordance with said embodiment is provided with all the guidance and information, as a customized Electronic Flight Instrument System (EFIS), necessary for the flight validation activities through the installation of an external display 120, such as a tablet or a small screen, preferably installed on top of existing equipment on the pilot cabin. The flight engineer on another hand is provided with all the guidance and information necessary for the flight validation activities through a display 101 of the computer unit 100.

The only interaction of present invention with the existing elements of the air vehicle is with a satellite navigation antenna, already existing on those air vehicles, for providing data to the satellite navigation receivers 21, 31, and the installation of the external display 120 on top of the existing pilot cabin equipage for providing information to the pilot.

Although in the previous embodiment the flight engineer receives the necessary information through the same computer unit 100 performing the computation of the flight guidance information, in other embodiments of the invention (not illustrated), it is also possible that the flight engineer receives the necessary information through a different computer unit. In this case, the computer unit 100 establishes telecommunication connectivity with the computer unit of the flight engineer and transmits the computed flight guidance information.

The first satellite navigation receiver 21 preferably is a GPS/SBAS receiver DO-229D MOPS compliant, and the second satellite navigation receiver 31 preferably is a dual-frequency GPS/SBAS receiver. The second satellite navigation receiver 31 main important task it to afford a backup of signals (data) captured during a flight of the air vehicle by the first satellite navigation receiver 21 from said satellite navigation antenna. To that end, the second satellite navigation receiver 31 during the flight also captures signals from the satellite navigation antenna, it further processes, via a dedicated processor, the captured signals, providing in addition further information for the guidance of the air vehicle, and compares the processed results with the signals captured by the first satellite navigation receiver 21. The additional information provided by the second satellite navigation receiver 31 preferably includes the detection of possible interferences in the signals captured from the satellite navigation antenna.

The two satellite navigation receivers 21, 31, and the inertial measurement unit 45 are preferably boxed into a portable unit. Therefore, all the elements forming the proposed device can be easily transported and installed on-board of the air vehicle.

Fig. 2 illustrates a preferred embodiment of the invention. In this preferred embodiment, the portable unit is installed into a rack case 70 that may include wheels 10 to ease the transportation thereof. The rack case 70 includes also two connectors, a power plug connector 56 for electrically feeding the device when connected to a power unit of the air vehicle (usually at 28V), and an antenna connector 11 for allowing connection of the device with the satellite navigation antenna of the air vehicle.

In case no power is available for electrically feeding the device, the device is also able to operate through batteries. To that end, the rack case 70 is provided with at least one battery (not illustrated).

Alternatively, in accordance with another embodiment, in this case not illustrated, the portable unit is installed in a rack/stand of the air vehicle.

Present invention is fully compatible with the following PBN Flight Instrument Procedures: Instrument Approach Procedures, Standard Instrument Departures, and End-Route Procedures. Principally, the invention has three different operating modes, depending on the flight data acquisition used:
- Flight Validation: is the main operation mode, and uses the coded information that was captured by the first satellite navigation receiver 21.
- Flight Analysis: is a replay of recorded flights, either POS Files generated by the computer unit 100 itself or by other sources.
- Flight Simulation: simulate a flight before flying it by using an open-source simulator or whatever other simulator.

The computer unit 100 further offers different software tools aimed at easing flight engineer tasks, for instance, a procedure editor tool (107 as illustrated in Fig. 1) where the engineer can easily code the flight procedure and its flight chart. Another tool is the automatic flight reporting tool 200, which is able to generate already flown flights reports 304 on-demand and can be accessed through a telecommunication network due to its web-based nature. Also, worth to mention is a KML generator, which creates flight tracks compatible with Google Earth® and other 3D Terrain viewers for any given recorded flights.

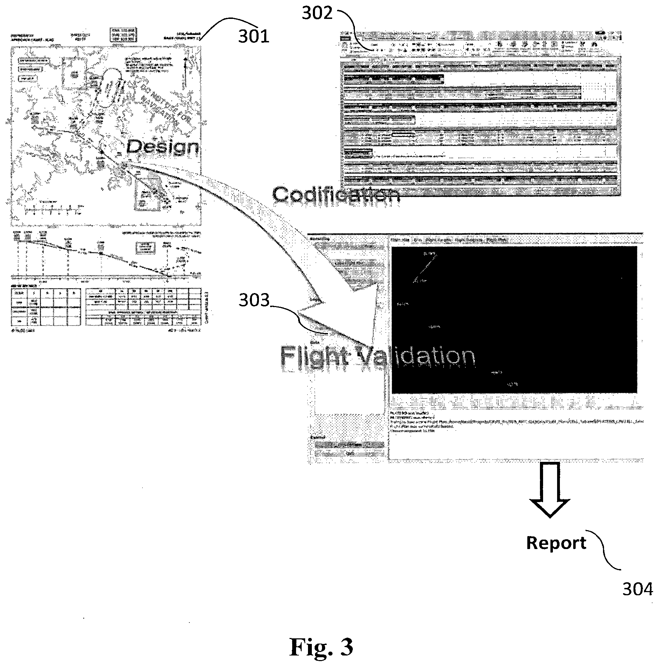

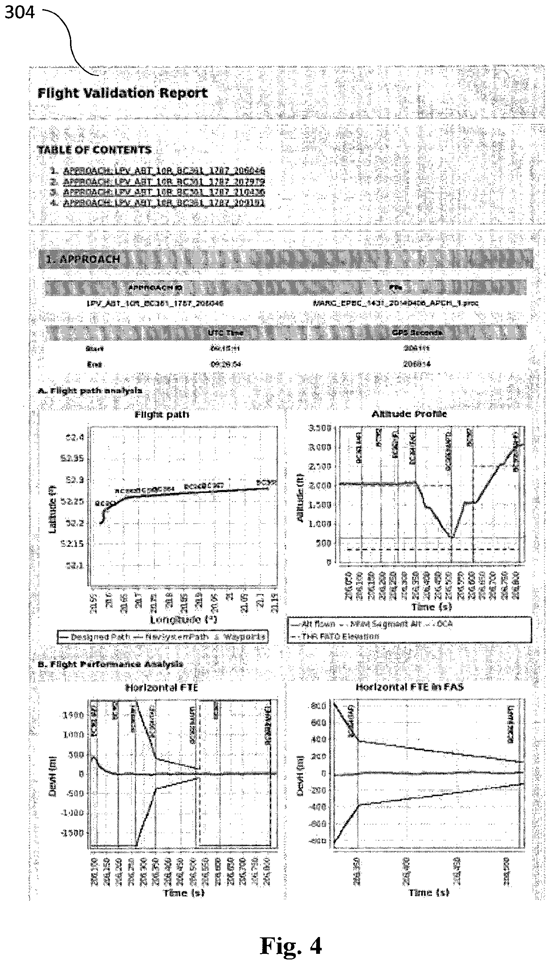

Fig. 3 illustrates an example of the steps executed for performing the flight validation and verification procedure, the steps mainly includes the design 301, codification 302 and flight validation 303. An example of a flight validation report 304 that can be generated with said flight validation and verification procedure is illustrated in Fig. 4.

While the foregoing description has been made with reference to particular embodiments of the present invention, it will be appreciated by those skilled in the art that changes to these embodiments may be made without departing from the scope of the present invention as it is defined in the appended claims.

## Claims

1. A device for flight procedures validation and verification for an air vehicle, comprising:
- a first satellite navigation receiver (21) connected to a satellite navigation antenna of the air vehicle, through a connector (11), for capturing signals from navigation satellites to be used as flight data; and
- an inertial measurement unit (45),
said first satellite navigation receiver (21) and said inertial measurement unit (45) being connected to a computer unit (100), and being configured to provide through said computer unit (100), coded information for flight guidance from the captured signals for at least a pilot of the air vehicle,
**characterized in that** the device further comprises a second satellite navigation receiver (31) connected to said satellite navigation antenna, through said connector (11), for capturing said signals from navigation satellites,
wherein said second satellite navigation receiver (31) includes a backup unit configured to afford a backup of the captured signals of the first satellite navigation receiver (21),
and includes a dedicated processor configured to process the signals captured by the second satellite navigation receiver (31), obtaining additional information for the guidance of the air vehicle, and configured to compare the processed results with the signals captured by the first satellite navigation receiver (21), the obtained additional information comprising at least detection of possible interferences in the captured signals; and
wherein the first and second satellite navigation receivers (21), (31) and the inertial measurement unit (45) are all integrated into a portable unit.

2. The device of claim 1, wherein the portable unit is fitted in an aircraft's or rotorcraft's rack.

3. The device of claim 2, wherein the portable unit is installed into a rack case (70).

4. The device of any of the previous claims, further comprising a connector (56) for power supply of the portable unit, the connector (56) arranged to be connected to a power unit of the air vehicle.

5. The device of claim 3, comprising at least one battery for power supply of the portable unit.

6. The device of any of the previous claims, further comprising means for displaying the coded information for flight guidance and/or the additional information, said means comprising:
- a first output for a computing device display (101) for a flight engineer; and
- a second output for a computing device display (120) for the pilot of the air vehicle.

7. The device of any of the previous claims, further comprising reporting means (200) for automatically generating flight procedure validation and verification reports (304).

8. The device of any of the previous claims, being configured to support flight validation procedures for aircraft and/or rotorcraft.

9. The device of claim 8, wherein the flight validation procedures at least include LNAV, LNAV/VNAV, LPV/LP and/or RNPA-AR operations.

10. The device of claim 8, being configured to support Area Navigation, or RNAV, instrument flight validation based on the guidelines provided by at least the following reference material: ICAO Doc 8071, ICAO Doc 9906, ICAO Doc 8168 and/or EUROCONTROL.

11. Method for flight procedures validation and verification for an air vehicle, comprising:
- capturing, by a first satellite navigation receiver (21), signals from navigation satellites to be used as flight data from a satellite navigation antenna of the air vehicle, said first satellite navigation receiver (21) being connected to said satellite navigation antenna through a connector (11); and
- providing, by the first satellite navigation receiver (21) and an inertial measurement unit (45), through a computer unit (100), coded information for flight guidance from the captured signals for at least a pilot of the air vehicle;
**characterized in that** the method further comprises:
- capturing, by a second satellite navigation receiver (31), signals from navigation satellites, said second satellite navigation receiver (31) being connected to said satellite navigation antenna, through said connector (11);
- affording, by said second satellite navigation receiver (31), a backup of the signals captured by the first satellite navigation receiver (21); and
- processing, via a dedicated processor, the signals captured by the second satellite navigation receiver (31), providing additional information for the guidance of the air vehicle, and comparing the processed results with the signals captured by the first satellite navigation receiver (21), said provided additional information including at least detection of possible interferences in said captured signals,
wherein the first and second satellite navigation receivers (21), (31) and the inertial measurement unit (45) are all integrated into a portable unit.

12. The method of claim 11, further comprising displaying the coded information for flight guidance and/or the additional information in a computing device display (101) for a flight engineer, and/or in a computing device display (120) for the pilot of the air vehicle.

13. The method of any of previous claims 11 or 12, further comprising automatically generating flight procedure validation and verification reports (304) with the coded information for flight guidance and/or with the additional information.

14. The method of any of previous claims 11 to 13, wherein:
- the flight procedures at least include LNAV, LNAV/VNAV, LPV/LP and/or RNPA-AR operations; and
- the coded information for flight guidance and/or the additional information support RNAV instrument flight validation based on the guidelines provided by at least the following reference material: ICAO Doc 8071, ICAO Doc 9906, ICAO Doc 8168 and/or EUROCONTROL.

## Patentansprüche

1. Vorrichtung zur Validierung und Verifizierung von Flugverfahren für ein Flugfahrzeug, umfassend:
- einen ersten Satellitennavigationsempfänger (21), welcher mit einer Satellitennavigationsantenne des Flugfahrzeugs, über einen Verbinder (11), verbunden ist, zur Erfassung von Signalen aus Navigationssatelliten, welche als Flugdaten zu verwenden sind; und
- eine inertiale Messeinheit (45),
wobei der genannte erste Satellitennavigationsempfänger (21) und die genannte inertiale Messeinheit (45) mit einer Rechnereinheit (100) verbunden sind, und dazu ausgebildet sind, über die genannte Rechnereinheit (100), kodierte Information zur Flugführung aus den erfassten Signalen mindestens einem Piloten des Flugfahrzeugs bereitzustellen,
**dadurch gekennzeichnet, dass** die Vorrichtung zusätzlich einen zweiten Satellitennavigationsempfänger (31) umfasst, welcher mit der genannten Satellitennavigationsantenne, über den genannten Verbinder (11), verbunden ist, zur Erfassung von den genannten Signalen aus Navigationssatelliten, wobei der genannte zweite Satellitennavigationsempfänger (31) eine Backup-Einheit beinhaltet, welche dazu ausgebildet ist, einen Backup der erfassten Signale des ersten Satellitennavigationsempfängers (21) zu bereiten und einen dedizierten Prozessor beinhaltet, welcher dazu ausgebildet ist, die vom zweiten Satellitennavigationsempfänger (31) erfassten Signale zu verarbeiten, unter Erhaltung von zusätzlicher Information zur Führung des Flugfahrzeugs, und dazu ausgebildet ist, die verarbeiteten Ergebnisse mit den vom ersten Satellitennavigationsempfänger (21) erfassten Signalen zu vergleichen, wobei die erhaltene zusätzliche Information mindestens die Ermittlung von möglichen Interferenzen in den erfassten Signalen umfasst; und
wobei der erste Satellitennavigationsempfänger (21) und der zweite Satellitennavigationsempfänger (31) und die inertiale Messeinheit (45) alle in einer tragbaren Einheit integriert sind.

2. Vorrichtung nach Anspruch 1, wobei die tragbare Einheit in einem Flugzeug- oder Drehflüglergestell eingebaut ist.

3. Vorrichtung nach Anspruch 2, wobei die tragbare Einheit in einem Gestellgehäuse (70) installiert ist.

4. Vorrichtung nach einem der vorhergehenden Ansprüche, zusätzlich umfassend einen Verbinder (56) zur Stromversorgung der tragbaren Einheit, wobei der Verbinder (56) dazu angeordnet ist, mit einer Antriebseinheit des Flugfahrzeugs verbunden zu werden.

5. Vorrichtung nach Anspruch 3, umfassend mindestens eine Batterie zur Stromversorgung der tragbaren Einheit.

6. Vorrichtung nach einem der vorhergehenden Ansprüche, zusätzlich umfassend Mittel für die Anzeige der kodierten Information zur Flugführung und/oder der zusätzlichen Information, wobei die genannten Mittel Folgendes umfassen:
- eine erste Ausgabe für eine Rechenvorrichtungsanzeige (101) für einen Flugingenieur; und
- eine zweite Ausgabe für eine Rechenvorrichtungsanzeige (120) für den Piloten des Flugfahrzeugs.

7. Vorrichtung nach einem der vorhergehenden Ansprüche, zusätzlich umfassend Berichtmittel (200) zur automatischen Erzeugung von Berichten zur Validierung und Verifizierung von Flugverfahren (304).

8. Vorrichtung nach einem der vorhergehenden Ansprüche, welche dazu ausgebildet ist, Flugvalidierungsverfahren für ein Flugzeug und/oder einen Drehflügler zu unterstützen.

9. Vorrichtung nach Anspruch 8, wobei die Flugvalidierungsverfahren mindestens LNAV-, LNAV/VNAV-, LPV/LP- und/oder RNPA-AR-Vorgänge beinhalten.

10. Vorrichtung nach Anspruch 8, welche dazu ausgebildet ist, Flächennavigation-, oder RNAV-, Instrumentenflugvalidierung basierend auf den Richtlinien, bereitgestellt durch mindestens das folgende Referenzmaterial: ICAO Doc 8071, ICAO Doc 9906, ICAO Doc 8168 und/oder EUROCONTROL, zu unterstützen.

11. Verfahren zur Validierung und Verifizierung von Flugverfahren für ein Flugfahrzeug, umfassend:
- das Erfassen, durch einen ersten Satellitennavigationsempfänger (21), von Signalen aus Navigationssatelliten, welche als Flugdaten aus einer Satellitennavigationsantenne des Flugfahrzeugs zu verwenden sind, wobei der genannte erste Satellitennavigationsempfänger (21) mit der genannten Satellitennavigationsantenne über einen Verbinder (11) verbunden ist; und
- das Bereitstellen, durch den ersten Satellitennavigationsempfänger (21) und eine inertiale Messeinheit (45) über eine Rechnereinheit (100), von kodierter Information zur Flugführung aus den erfassten Signalen für mindestens einen Pilot des Flugfahrzeugs;
**dadurch gekennzeichnet, dass** das Verfahren zusätzlich Folgendes umfasst:
- das Erfassen, durch einen zweiten Satellitennavigationsempfänger (31), von Signalen aus Navigationssatelliten, wobei der genannte zweite Satellitennavigationsempfänger (31) mit der genannten Satellitennavigationsantenne, über den genannten Verbinder (11), verbunden ist;
- das Bereiten, durch den genannten zweiten Satellitennavigationsempfänger (31), eines Backups der vom ersten Satellitennavigationsempfänger (21) erfassten Signalen; und
- das Verarbeiten, mittels eines dedizierten Prozessors, der vom zweiten Satellitennavigationsempfänger (31) erfassten Signale, unter Bereitstellung von zusätzlicher Information zur Führung des Flugfahrzeugs, und das Vergleichen der verarbeiteten Ergebnisse mit den vom ersten Satellitennavigationsempfänger (21) erfassten Signalen, wobei die genannte bereitgestellte zusätzliche Information mindestens die Ermittlung der möglichen Interferenzen in den genannten erfassten Signalen beinhaltet,
wobei der erste Satellitennavigationsempfänger (21) und der zweite Satellitennavigationsempfänger (31) und die inertiale Messeinheit (45) alle in einer tragbaren Einheit integriert sind.

12. Verfahren nach Anspruch 11, zusätzlich umfassend die Anzeige der kodierten Information zur Flugführung und/oder der zusätzlichen Information in einer Rechenvorrichtungsanzeige (101) für einen Flugingenieur, und/oder in einer Rechenvorrichtungsanzeige (120) für den Piloten des Flugfahrzeugs.

13. Verfahren nach einem der vorhergehenden Ansprüche 11 oder 12, zusätzlich umfassend die automatische Erzeugung von Berichten zur Validierung und Verifizierung von Flugverfahren (304) mit der kodierten Information zur Flugführung und/oder mit der zusätzlichen Information.

14. Verfahren nach einem der vorhergehenden Ansprüche 11 bis 13, wobei:
- die Flugverfahren mindestens LNAV-, LNAV/VNAV-, LPV/LP- und/oder RNPA-AR-Vorgänge beinhalten; und
- die kodierte Information zur Flugführung und/oder die zusätzliche Information RNAV-Instrumentenflugvalidierung basierend auf den Richtlinien, bereitgestellt durch mindestens das folgende Referenzmaterial: ICAO Doc 8071, ICAO Doc 9906, ICAO Doc 8168 und/oder EUROCONTROL, unterstützen.

## Revendications

1. Un dispositif pour valider et vérifier les procédures de vol pour un véhicule aérien, comportant:
- un premier récepteur de navigation par satellite (21) connecté à une antenne de navigation par satellite du véhicule aérien, à travers un connecteur (11) pour capter des signaux provenant des satellites de navigation à utiliser comme données de vol; et
- une unité de mesure inertielle (45),
ce premier récepteur de navigation par satellite (21) et cette unité de mesure inertielle (45) étant connectés à une unité d'ordinateur (100) et étant configurés pour fournir à travers cette unité d'ordinateur (100), des informations codées pour le guidage du vol provenant de signaux captés pour au moins un pilote du véhicule aérien,
**caractérisé en ce que** le dispositif comporte en plus un deuxième récepteur de navigation par satellite (31) connecté à cette antenne de navigation par satellite, à travers ce connecteur (11), pour capter ces signaux provenant de satellites de navigation
dans lequel ce deuxième récepteur de navigation par satellite (31) comprend une unité de sauvegarde configurée pour offrir une sauvegarde
des signaux captés du premier récepteur de navigation par satellite (21),
et comprend un processeur dédié configuré pour traiter les signaux captés par le deuxième récepteur de navigation par satellite (31) obtenant des informations complémentaires pour le guidage du véhicule aérien et configuré pour comparer les résultats traités avec les signaux captés par le premier récepteur de navigation par satellite (21), les informations complémentaires obtenues comprenant au moins la détection d'interférences possibles dans les signaux captés; et
dans lequel les premier et deuxième récepteurs de navigation par satellite (21), (31) et l'unité de mesure inertielle (45) sont tous intégrés dans une unité portable.

2. Le dispositif de la revendication 1, dans lequel l'unité portable est installée dans un rack d'avion ou d'aéronef à voilure tournante.

3. Le dispositif de la revendication 2, dans lequel l'unité portable est installée dans un rack case (70).

4. Le dispositif selon une quelconque des revendications précédentes comprenant en plus un connecteur (56) pour l'alimentation électrique de l'unité portable, le connecteur (56) aménagé pour être connecté à une unité d'alimentation électrique du véhicule aérien.

5. Le dispositif selon la revendication 3, comprenant au moins une batterie pour l'alimentation électrique de l'unité portable.

6. Le dispositif d'au moins une quelconque des revendications précédentes comprenant en plus des moyens pour afficher les informations codées pour le guidage du vol et/ou les informations complémentaires, ces moyens comportant:
- une première sortie pour l'affichage d'un dispositif informatique (101) pour un technicien de vol; et
- une deuxième sortie pour l'affichage d'un dispositif informatique (120) pour le pilote du véhicule aérien.

7. Le dispositif selon une quelconque des revendications précédentes comprenant en plus des moyens de communication de données (200) pour générer automatiquement des rapports de validation et de vérification de procédure de vol (304).

8. Le dispositif selon une quelconque des revendications précédentes étant configuré pour le support des procédures de validation du vol pour avion et/ou aéronef à voilure tournante.

9. Le dispositif de la revendication 8, dans lequel les procédures de validation de vol comprennent au moins des opérations LNAV, LNAV/VNAV, LPV/LP et/ou RNPA-AR.

10. Le dispositif de la revendication 8 étant configuré pour le support de la Navigation de Surface ou RNAV, la validation de vol aux instruments basée sur les instructions fournies par au moins le matériel suivant de référence: ICAO Doc 8071, ICAO Doc 9906, ICAO Doc 8168 et/ou EUROCONTROL.

11. Méthode pour la validation et vérification de procédures de vol pour un véhicule aérien, comportant:
- capter, par un premier récepteur de navigation par satellite (21), des signaux provenant de satellites de navigation à utiliser comme données de vol provenant d'une antenne de navigation par satellite du véhicule aérien, ce premier récepteur de navigation par satellite (21) étant connecté à cette antenne de navigation par satellite à travers un connecteur (11); et
- fournir, par le premier récepteur de navigation par satellite (21) et une unité de mesure inertielle (45), à travers une unité d'ordinateur (100), des informations codées pour le guidage de vol provenant des signaux captés pour au moins un pilote du véhicule aérien;
**caractérisée en ce que** la méthode en plus comprend:
- capter, par un deuxième récepteur de navigation par satellite (31), des signaux provenant de satellites de navigation, ce deuxième récepteur de navigation par satellite (31) étant connecté à cette antenne de navigation par satellite, à travers ce connecteur (11);
- fournir, par ce deuxième récepteur de navigation par satellite (31), une sauvegarde des signaux captés par le premier récepteur de navigation par satellite (21); et
- traiter, par le biais d'un processeur dédié, les signaux captés par le deuxième récepteur de navigation par satellite (31), en fournissant des informations complémentaires pour le guidage du véhicule aérien et en comparant les résultats traités avec les signaux captés par le premier récepteur de navigation par satellite (21), ces informations complémentaires fournies comprenant au moins la détection d'interférences possibles dans ces signaux captés,
dans laquelle les premier et deuxième récepteurs de navigation (21), (31) et l'unité de mesure inertielle (45) sont tous intégrés dans une unité portable.

12. La méthode de la revendication 11, comprenant en plus l'affichage d'informations codées pour le guidage du vol et/ou les informations complémentaires dans l'affichage d'un dispositif informatique (101) pour un technicien de vol et/ou dans l'affichage d'un dispositif informatique (120) pour le pilote du véhicule aérien.

13. La méthode d'une quelconque des revendications précédentes 11 ou 12 comportant de plus la génération automatique de rapports de validation et vérification de procédures de vol (304) avec les informations codés pour le guidage de vol et/ou les informations complémentaires.

14. La méthode d'une quelconque des revendications précédentes 11 à 13, dans laquelle:
- les procédures de vol comprennent au moins les opérations LNAV, LNAV/VNAV, LPV/LP et/ou RNPA-AR; et
- les informations codées pour le guidage de vol et/ou la validation de vol aux instruments RNAV de support des informations complémentaires basées sur les instructions fournies par au moins le matériel suivant de référence: ICAO Doc 8071, ICAO Doc 9906, ICAO Doc 8168 et/ou EUROCONTROL.
